(19)

**Europäisches Patentamt**
**European Patent Office**
**Office européen des brevets**

(11) **EP 1 939 590 B1**

(12) **EUROPEAN PATENT SPECIFICATION**

(45) Date of publication and mention
of the grant of the patent:
**07.03.2018 Bulletin 2018/10**

(51) Int Cl.:
***G01C 21/34*** *(2006.01)*

(21) Application number: **06425869.2**

(22) Date of filing: **29.12.2006**

(54) **A method of calculating an optimal path between a starting point and a destination point, and constrained to pass through an intermediate waypoint, a navigation system and a corresponding computer program product**

Verfahren zur Berechnung eines optimalen Weges zwischen einem Ausgangspunkt und einem Zielpunkt, der durch einen dazwischenliegenden Wegpunkt führen muss, Navigationssystem und entsprechendes Computerprogrammprodukt

Procédé de calcul d'un chemin optimal entre un point de départ et un point de destination, et contraint de passer par un point de cheminement intermédiaire, système de navigation et produit de programme informatique correspondant

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**02.07.2008 Bulletin 2008/27**

(73) Proprietor: **Magneti Marelli S.p.A.**
**20011 Corbetta (MI) (IT)**

(72) Inventors:
• **Bruci, Evaldo**
  **10078 Venaria Reale (Torino) (IT)**

• **Desimone, Domenico**
  **10078 Venaria Reale (Torino) (IT)**

(74) Representative: **Deambrogi, Edgardo et al**
**Jacobacci & Partners S.p.A.**
**Corso Emilia 8**
**10152 Torino (IT)**

(56) References cited:
**EP-A- 1 267 146        EP-A1- 0 504 854**
**EP-A1- 0 726 447        EP-A2- 0 854 353**
**US-A1- 2004 039 520**

## Description

The present invention relates to the automatic calculation of an optimal path from a starting point to a destination point, in particular for navigation systems such as vehicle-mounted or portable navigation systems.

A computer-implemented method of calculating an optimal path between a starting point and a destination point of an urban or geographical road network, such as a road network stored on a substrate readable by a computer as an electronic map associated with the navigation system, comprises the definition of a series of contiguous elemental path sections in which each section connects a transit node to an adjacent transit node.

There are known methods of calculating an optimal path between a starting point and a destination point that are based on a bidirectional path-development strategy, that is, on the calculation of a plurality of forward partial paths, originating from the starting point, and of a plurality of backward partial paths, originating from the destination point.

The optimal complete path is selected from a plurality of complete paths arising from the meeting of individual forward and backward partial paths, on the basis of a predetermined criterion which may be, for example, the requirement for the fastest route or the shortest route between two locations.

In the conventional use of a navigation system, a traveller often wishes to be able to constrain the calculation of the path to pass through a predetermined locality, as disclosed in US 2004/0039520. In many of these cases, however, he does not necessarily intend to require reaching and passing through the locality indicated, for example, the urban centre of a large city, but he simply wishes to be able to require passing near such locality in order to select a preferred subset of solutions.

In this case, it is particularly disadvantageous for the navigation algorithm to interpret the programmer's instruction as a requirement to pass through the centre of the locality as disclosed by US 2004/0039520, since it risks suggesting an unnecessary diversion, often lengthening the journey time or the overall distance to be travelled in comparison with optimal solutions which would be achieved by coming close to the waypoint locality indicated without passing through it.

The object of the present invention is to provide an improved method of calculating an optimal path between a starting point and a destination point and constrained to pass through an area surrounding at least one intermediate waypoint.

According to the present invention, this object is achieved by means of a method having the characteristics specified in Claim 1, in claim 7 and in claim 8.

Further subjects of the invention are a navigation system and a processing program or set of programs, as claimed.

Specific embodiments of the invention form the subjects of the dependent claims.

Further characteristics and advantages of the invention will be described in greater detail in the following specific description which is given by way of non-limiting example with reference to the appended drawings, in which:

Figure 1 is a schematic representation of the principal components defining a desired path constrained to pass through a single intermediate waypoint,

Figure 2 is a schematic representation of the principal components defining a desired path constrained to pass through two intermediate waypoints,

Figure 3 is a schematic representation of the calculation of a path in a configuration having the components of Figure 1, according to the calculation method of the invention,

Figure 4 is a schematic representation of the calculation of a path in a configuration having the components of Figure 2, according to the calculation method of the invention, and

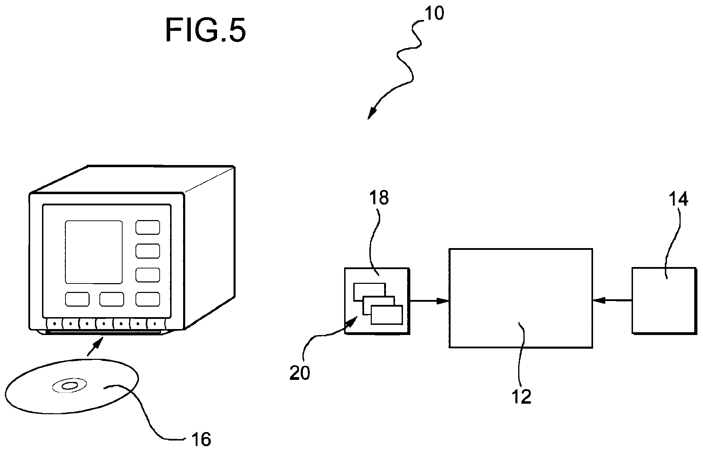

Figure 5 is a diagram of a navigation system programmed to implement the path-calculation method of the invention.

In a navigation system, a desired path is defined by a starting point L, a destination point D and, optionally, intermediate waypoints $WP_k$ (k index variable from 1 to a number of waypoints predetermined by the user) which together constitute the points defining the path.

The calculated path as a whole includes a plurality of contiguous elemental sections in sequence, each of which joins a transit node to an adjacent transit node of a cartographic road map stored on a storage substrate readable by a computer.

The forward and backward partial paths, which are calculated in the course of the execution of the method in accordance with a two-dimensional development strategy, are indicated $P_{i,f}$ and $P_{i,b}$, respectively, in the drawings, the individual sections making up the paths are indicated $s_{ij}$, and the transit nodes forming part of the path are indicated $n_{ij}$.

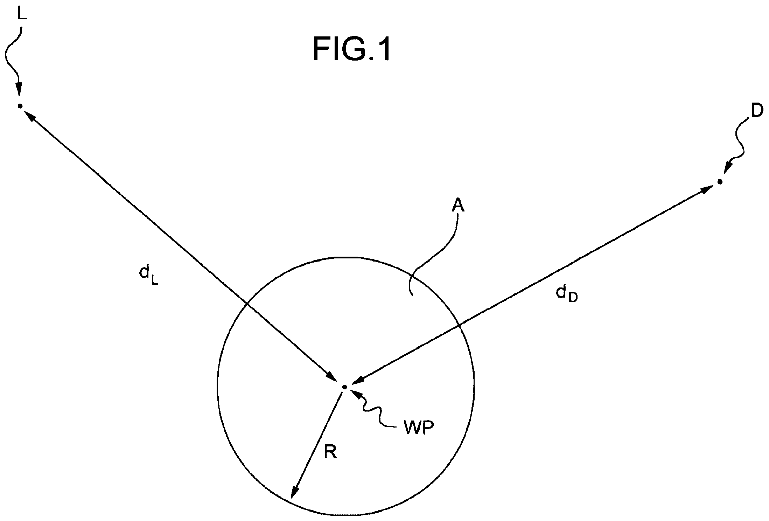

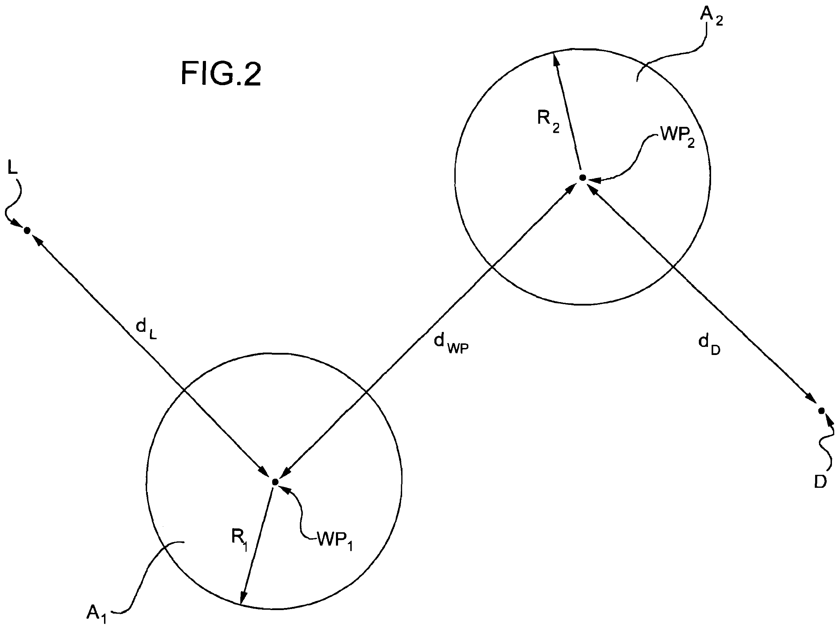

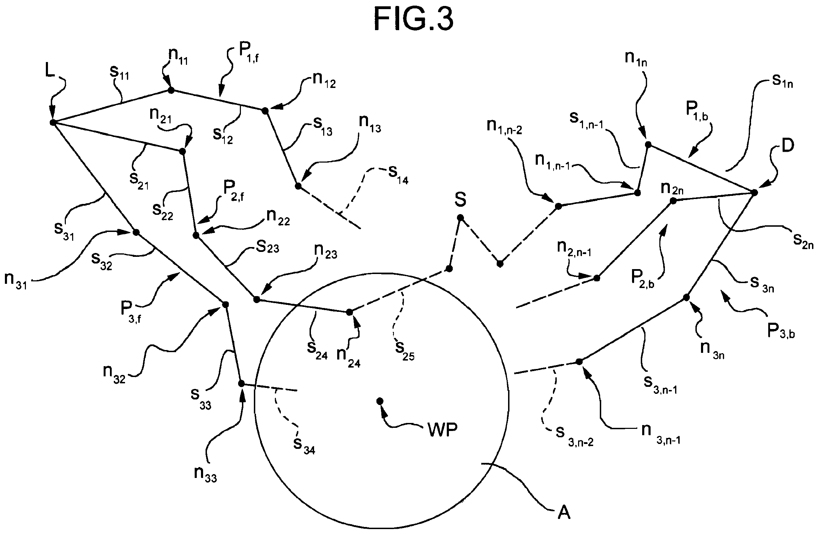

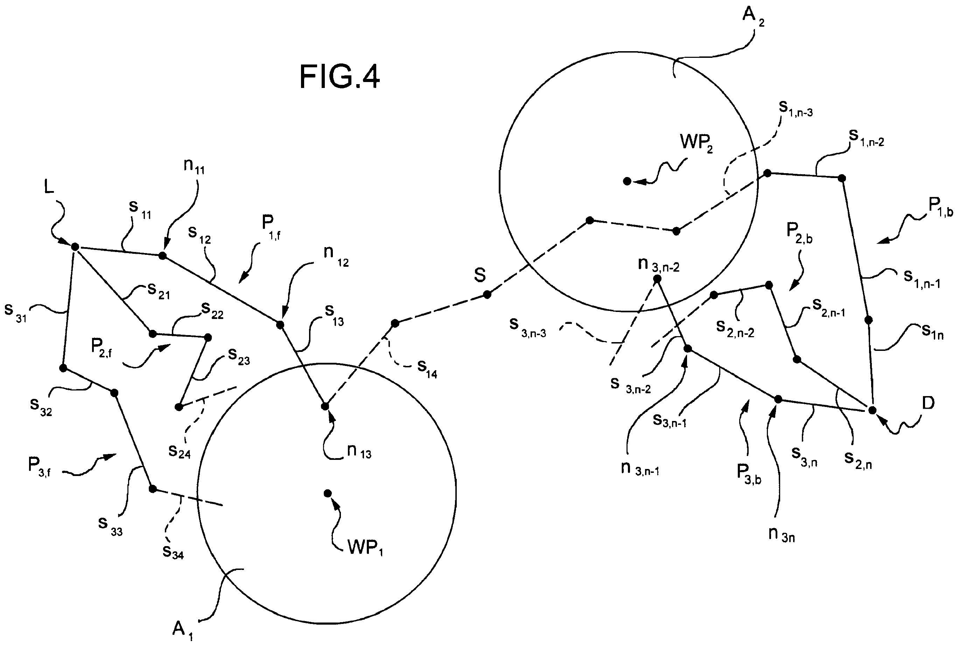

Figures 1 and 3 relate to the calculation of a path constrained to pass through a single intermediate waypoint WP and Figures 2 and 4 relate to the calculation of a path constrained to pass through two intermediate waypoints, which are indicated $WP_1$ and $WP_2$, respectively, and whose sequential order along the path is preset by the user.

Any other path constrained to pass through a number of intermediate waypoints greater than two can be calculated on the basis of one of the specific situations illustrated, that is, of the situation with a single intermediate waypoint for an odd number of waypoints and of the situation with two intermediate waypoints for an even number of waypoints.

Therefore, in the following a detailed analysis will be made with respect to the calculation methods adopted in the two reference types, since they can readily be extended to types of path with different numbers of intermediate waypoints.

A surrounding area $A_k$ is defined for each intermediate waypoint $WP_k$, which is preferably of circular shape with an approach radius $R_k$ to the respective central waypoint calculated in accordance with the following equation:

$$R_k = \min(d_{k,k-1}, \ d_{k+1,k}) \cdot C$$

that is, equal to a predetermined fraction of the minimum among the theoretical distance (estimated as the crow-fly distance) of the intermediate waypoint in question from a preceding path-defining point (the starting point or a preceding intermediate waypoint) indicated $d_{k,k-1}$, and the theoretical distance of the intermediate waypoint in question from a next path-defining point (a subsequent intermediate waypoint or the destination point) indicated $d_{k+1,k}$.

The constant C preferably adopts a value of between 0.1 and 0.9, and even more preferably is equal to 0.35.

In any case, it is advantageous to limit the extent of the surrounding areas to a predetermined maximum value, for example, depending on the largest metropolitan area existing in the geographical region covered by the cartographic road map, or at world level, beyond which value they cannot be further extended. For circular surrounding areas, this maximum value can be specified as the maximum value of the approach radius and, in the currently preferred embodiment, is equal to 40 km.

In the first type of path that is taken as an example, that is, a path with a single intermediate waypoint WP, the path-calculation method comprises the calculation of a plurality of forward partial paths $P_{1,f}$, $P_{2,f}$, $P_{3,f}$ originating from the starting point L and directed towards a provisional destination point represented by the preset intermediate waypoint WP, and the calculation of a plurality of backward partial paths $P_{1,b}$, $P_{2,b}$, $P_{3,b}$ originating from the destination point D and directed towards a provisional destination point represented by the preset intermediate waypoint WP.

When a transit node ($n_{24}$ in Figure 3) which forms part of the area A surrounding the provisional destination point WP and which is known as the "access node" to the area surrounding WP is reached by at least one of the partial paths, or when a predetermined equivalent condition is satisfied, all of the partial paths that have been developed in parallel are diverted towards the next path-defining point. If the partial path is a forward path, it is diverted towards the destination point D. If the partial path is a backward path, it is diverted towards the starting point L.

When a forward path and a backward path meet at an intersection node or solution point S, a complete path between the starting point and the destination point is established and their development is stopped.

A score is attributed to each complete calculated path, in accordance with a predetermined criterion (for example, shorter distance or faster journey) and, if the path is entirely outside the area surrounding the waypoint WP or has a solution point outside that area, a penalty is applied (optionally modulated according to the distance between the solution and the perimeter of the surrounding area).

The path which has the highest score, or the lowest cost function taking account of the respective scores and penalties, is selected from a plurality of complete paths arising from the calculation of respective solution points S at which forward partial paths $P_{i,f}$ and backward partial paths $P_{i,b}$ meet.

To bring about the diversion of a partial path towards the next path-defining point, conditions equivalent to the reaching of an access node to the area surrounding the provisional destination point WP by at least one of the partial paths are: i) the reaching of a predetermined number of access nodes to the area surrounding the provisional destination point by the plurality of calculated partial paths and ii) the reaching of a predetermined maximum number of transit nodes by the plurality of partial paths, starting from the moment at which a first access node to the area surrounding the provisional destination point is reached. The second alternative ensures greater proximity to the waypoint.

The calculation of a path constrained to an odd number of intermediate waypoints is based on the type of calculation defined above, substantially with the application of the same rules.

When the first intermediate waypoint $WP_1$ has been reached from the starting point, the forward partial paths $P_{i,f}$ are diverted towards the next intermediate waypoint $WP_2$.

Simultaneously, when the last intermediate waypoint $WP_n$ has been reached from the destination point, the backward partial paths $P_{i,b}$ are diverted towards the preceding intermediate waypoint $WP_{n-1}$.

The calculation continues until a stage is reached at which the forward and backward partial paths are attracted towards a common intermediate waypoint $WP_{(n+1)/2}$, which again corresponds to the situation for a single waypoint WP.

The sequential order of the intermediate waypoints is advantageously established by the user.

The complete solution paths are always found when the forward and backward paths meet, and the path which has the best score, or the lowest cost function taking account of the respective scores and penalties, is selected therefrom as the optimal path P.

In the second type of path described by way of example, that is, a path with two intermediate waypoints

WP$_1$ and WP$_2$, the path-calculation method comprises the calculation of a plurality of forward partial paths P$_{i,f}$, P$_{2,f}$, P$_{3,f}$ originating from the starting point L and directed towards a respective first provisional destination point represented by the first preset intermediate waypoint WP$_1$, and the calculation of a plurality of backward partial paths P$_{1,b}$, P$_{2,b}$, P$_{3,b}$ originating from the destination point D and directed towards a respective first provisional destination point represented by the second preset intermediate waypoint WP$_2$.

When a transit node (n$_{13}$ in Figure 4) forming part of the area A$_1$ surrounding the provisional destination point WP$_1$, known as the "access node" to the surrounding area WP$_1$, is reached by at least one of the forward partial paths, or when a predetermined equivalent condition has been satisfied, all of the forward partial paths which have been developed in parallel are diverted towards the next intermediate waypoint WP$_2$.

Simultaneously, when a transit node (n$_{3,n-2}$ in Figure 4) forming part of the area A$_2$ surrounding the provisional destination point WP$_2$, known as the "access node" to the surrounding area WP$_2$, is reached by at least one of the backward partial paths, or when a predetermined equivalent condition has been satisfied, all of the backward partial paths which have been developed in parallel are diverted towards the preceding intermediate waypoint WP$_1$.

When a forward path and a backward path meet at an intersection node or solution point S, a complete path between the starting point and the destination point is established and their development is stopped.

A score is attributed to each complete calculated path in accordance with a predetermined criterion (for example, shorter distance or faster journey) and, if the path is entirely outside one or more of the areas surrounding the waypoints WP$_1$ and WP$_2$, a proportional penalty (optionally modulated according to the distance from those surrounding areas) is applied. Naturally, a penalty is not applied with respect to the location of a solution point because, since it must theoretically be situated halfway between the two intermediate waypoints, it certainly cannot fall within an area surrounding one of them.

The path which has the best score, or the lowest cost function taking account of the respective scores and penalties, is selected from a plurality of complete paths arising from the calculation of respective solution points S at which forward partial paths P$_{i,f}$ and backward partial paths P$_{i,b}$ meet.

The conditions equivalent to the reaching of an access node to the area surrounding a provisional destination point WP$_1$ or WP$_2$ by at least one of the partial paths in order to bring about the diversion of a partial path towards the next path-defining point are similar to those given in the preceding example.

The calculation of a path constrained to an even number of intermediate waypoints is based on the type of calculation defined above, substantially with the application of the same rules.

When the first intermediate waypoint WP$_1$ has been reached from the starting point, the forward partial paths P$_{i,f}$ are diverted towards the next intermediate waypoint WP$_2$.

Simultaneously, when the last intermediate waypoint WP$_n$ has been reached from the destination point, the backward partial paths P$_{i,b}$ are diverted towards the preceding intermediate waypoint WP$_{n-1}$.

The calculation continues until a stage is reached at which the forward and backward partial paths are attracted towards respective central intermediate waypoints WP$_{n/2}$ and WP$_{(n/2)+i}$, which again corresponds to the situation for two waypoints WP$_1$ and WP$_2$.

The complete solution paths are always found when the forward and backward partial paths meet, and the path which has the best score, or the lowest cost function taking account of the respective scores and penalties, is selected therefrom as the optimal path P.

A vehicle-mounted or portable navigation system 10 comprises a processing unit 12 arranged to calculate paths on the basis of a cartographic road map 14 stored on a storage substrate 16, and non-volatile memory means 18 carrying a processing program or set of programmes 20 which can be executed by the processing unit and comprising one or more code modules for the implementation of the calculation method as described above.

Naturally, the principle of the invention remaining the same, the forms of embodiment and details of construction may be varied widely with respect to those described and illustrated purely by way of non-limiting example, without thereby departing from the scope of protection of the present invention defined by the appended claims.

**Claims**

1. A computer-implemented method of calculating a path between a starting point (L) and a destination point (D) of a cartographic road map stored on a storage substrate readable by a computer, and passing through at least one predetermined intermediate waypoint (WP$_k$), the path being defined by a series of contiguous elemental sections (s$_{ij}$) in which each section joins a transit node (n$_{ij}$) to an adjacent transit node (n$_{i\,j+1}$), the starting and destination points and the intermediate waypoints (L, D, WP$_k$) constituting a set of points defining the desired path,
wherein at least a forward partial path originating from the starting point (L) and a backward partial path originating from the destination point (D) are calculated, and a complete path (P) between the starting point (L) and the destination point (D) is obtained by joining the forward partial path (P$_{i,f}$) and the backward partial path (P$_{i,b}$) which meet at an intersection node,

**characterized in that** it comprises:

- defining a respective surrounding area ($A_k$) for each preset intermediate waypoint ($WP_k$),
- calculating from the starting point (L) a plurality of forward partial paths ($P_{i,f}$) directed towards a provisional target point represented by a preset intermediate waypoint ($WP_k$),
- calculating from the destination point (D) a plurality of backward partial paths ($P_{i,b}$) directed towards a provisional target point represented by a preset intermediate waypoint ($WP_{k'}$), and
- when at least one transit node ($n_{ij}$) in the defined surrounding area ($A_k$) of a provisional target point ($WP_k$; $WP_{k'}$) has been reached, diverting the partial paths ($P_{i,f}$, $P_{i,b}$) headed for said provisional target point ($WP_k$; $WP_{k'}$) towards a next path-defining point ($WP_{k+1}$) according to a predetermined order of travel, if the partial path is a forward path ($P_{i,f}$), or towards a preceding path-defining point ($WP_{k'-1}$) according to the predetermined order of travel, if the partial path is a backward path ($P_{i,b}$),

wherein the defined surrounding area ($A_k$) is established as a circular area of a radius ($R_k$) which is equal to a predetermined fraction of the minimum among the theoretical distance of the intermediate waypoint ($WP_k$) from a preceding path-defining point (L; $WP_{k-1}$), and from a next path-defining point (D; $WP_{k+1}$);
the method further comprising obtaining a plurality of complete paths ($P_i$) by the joining of a respective forward partial path ($P_{i,f}$) and a respective backward partial path ($P_{i,b}$) which meet at a respective intersection node, and selecting an optimal complete path on the basis of at least one predetermined criterion,
wherein said predetermined criterion comprises the calculation of a cost function, and
wherein said cost function is calculated on the basis of scores assigned in accordance with a predetermined rule and penalties attributed to the complete path solutions that are outside the defined surrounding areas ($A_k$) of the intermediate waypoints ($WP_k$).

2. A method according to Claim 1, **characterized in that** it comprises, when at least one transit node ($n_{ij}$) in the defined surrounding area ($A_k$) of the provisional target point ($WP_k$) has been reached, the diversion of the partial paths ($P_{i,f}$, $P_{i,b}$) headed for the provisional target point ($WP_k$), towards:

i) the destination point (D) if the partial path is a forward path ($P_{i,f}$) and a single required intermediate waypoint (WP) is preset;
ii) the starting point (L) if the partial path is a backward path ($P_{i,b}$) and a single required intermediate waypoint (WP) is preset;
iii) a further, provisional target point represented by a next preset intermediate waypoint ($WP_{k+1}$) in a predetermined order of travel, if the partial path is a forward path ($P_{i,f}$) and a plurality of required intermediate waypoints ($WP_k$) are preset;
iv) a further, provisional target point represented by a preceding preset intermediate waypoint ($WP_{k-1}$) in a predetermined order of travel, if the partial path is a backward path ($P_{i,b}$) and a plurality of required intermediate waypoints ($WP_k$) are preset.

3. A method according to Claim 1, **characterized in that** the cost function is calculated on the basis of scores assigned in accordance with a predetermined rule and penalties attributed to the complete path solutions of which the intersection nodes between the partial forward paths ($P_{i,f}$) and the backward partial paths ($P_{i,b}$) are outside the defined surrounding areas ($A_k$) of the intermediate waypoints ($WP_k$).

4. A method according to Claim 1, **characterized in that** the predetermined fraction is equal to 0.35.

5. A method according to Claim 1 or 4, **characterized in that** the defined surrounding area has a predetermined maximum radius equal to 40 km.

6. A method according to any one of the preceding claims, **characterized in that** it comprises the definition by the user of the sequential order of the required intermediate waypoints ($WP_k$) along the path.

7. A computer-implemented method of calculating a path between a starting point (L) and a destination point (D) of a cartographic road map stored on a storage substrate readable by a computer, and passing through at least one predetermined intermediate waypoint ($WP_k$), the path being defined by a series of contiguous elemental sections ($s_{ij}$) in which each section joins a transit node ($n_{ij}$) to an adjacent transit node ($n_{i\,j+1}$), the starting and destination points and the intermediate waypoints (L, D, $WP_k$) constituting a set of points defining the desired path,
wherein at least a forward partial path originating from the starting point (L) and a backward partial path originating from the destination point (D) are calculated, and a complete path (P) between the starting point (L) and the destination point (D) is obtained by joining the forward partial path ($P_{i,f}$) and the backward partial path ($P_{i,b}$) which meet at an intersection node,
**characterized in that** it comprises:

- defining a respective surrounding area ($A_k$) for each preset intermediate waypoint ($WP_k$),

- calculating from the starting point (L) a plurality of forward partial paths ($P_{i,f}$) directed towards a provisional target point represented by a preset intermediate waypoint ($WP_k$),
- calculating from the destination point (D) a plurality of backward partial paths ($P_{i,b}$) directed towards a provisional target point represented by a preset intermediate waypoint ($WP_{k'}$),
- the diversion of a partial path ($P_{i,f}$; $P_{i,b}$) towards a next path-defining point ($WP_{k+1}$) according to the predetermined order of travel, if the partial path is a forward path ($P_{i,f}$), or towards a preceding path-defining point ($WP_{k'-1}$) according to the predetermined order of travel, if the partial path is a backward path ($P_{i,b}$), when a predetermined number of access nodes ($n_{ij}$) to the defined surrounding area ($A_k$) of the current provisional target point ($WP_k$) is reached by the plurality of partial paths ($P_{i,f}$; $P_{i,b}$),

wherein the defined surrounding area ($A_k$) is established as a circular area of a radius ($R_k$) which is equal to a predetermined fraction of the minimum among the theoretical distance of the intermediate waypoint ($WP_k$) from a preceding path-defining point (L; $WP_{k-1}$), and from a next path-defining point (D; $WP_{k+1}$);
the method further comprising obtaining a plurality of complete paths ($P_i$) by the joining of a respective forward partial path ($P_{i,f}$) and a respective backward partial path ($P_{i,b}$) which meet at a respective intersection node, and selecting an optimal complete path on the basis of at least one predetermined criterion,
wherein said predetermined criterion comprises the calculation of a cost function, and
wherein said cost function is calculated on the basis of scores assigned in accordance with a predetermined rule and penalties attributed to the complete path solutions that are outside the defined surrounding areas ($A_k$) of the intermediate waypoints ($WP_k$).

8. A computer-implemented method of calculating a path between a starting point (L) and a destination point (D) of a cartographic road map stored on a storage substrate readable by a computer, and passing through at least one predetermined intermediate waypoint ($WP_k$), the path being defined by a series of contiguous elemental sections ($s_{ij}$) in which each section joins a transit node ($n_{ij}$) to an adjacent transit node ($n_{ij+1}$), the starting and destination points and the intermediate waypoints (L, D, $WP_k$) constituting a set of points defining the desired path,
wherein at least a forward partial path originating from the starting point (L) and a backward partial path originating from the destination point (D) are calculated, and a complete path (P) between the starting point (L) and the destination point (D) is obtained by joining the forward partial path ($P_{i,f}$) and the backward partial path ($P_{i,b}$) which meet at an intersection node,
**characterized in that** it comprises:

- defining a respective surrounding area ($A_k$) for each preset intermediate waypoint ($WP_k$),
- calculating from the starting point (L) a plurality of forward partial paths ($P_{i,f}$) directed towards a provisional target point represented by a preset intermediate waypoint ($WP_k$),
- calculating from the destination point (D) a plurality of backward partial paths ($P_{i,b}$) directed towards a provisional target point represented by a preset intermediate waypoint ($WP_{k'}$),
- the diversion of a partial path ($P_{i,f}$; $P_{i,b}$) towards a next path-defining point ($WP_{k+1}$) according to the predetermined order of travel, if the partial path is a forward path ($P_{i,f}$), or towards a preceding path-defining point ($WP_{k'-1}$) according to the predetermined order of travel, if the partial path is a backward path ($P_{i,b}$), when a predetermined maximum number of transit nodes ($n_{ij}$) is reached by the plurality of partial paths ($P_{i,f}$; $P_{i,b}$), starting from the moment at which the first access node to the defined surrounding area ($A_k$) of the current provisional target point ($WP_k$) is reached,

wherein the defined surrounding area ($A_k$) is established as a circular area of a radius ($R_k$) which is equal to a predetermined fraction of the minimum among the theoretical distance of the intermediate waypoint ($WP_k$) from a preceding path-defining point (L; $WP_{k-1}$), and from a next path-defining point (D; $WP_{k+1}$);
the method further comprising obtaining a plurality of complete paths ($P_i$) by the joining of a respective forward partial path ($P_{i,f}$) and a respective backward partial path ($P_{i,b}$) which meet at a respective intersection node, and selecting an optimal complete path on the basis of at least one predetermined criterion,
wherein said predetermined criterion comprises the calculation of a cost function, and
wherein said cost function is calculated on the basis of scores assigned in accordance with a predetermined rule and penalties attributed to the complete path solutions that are outside the defined surrounding areas ($A_k$) of the intermediate waypoints ($WP_k$).

9. A navigation system for the calculation of a path between a starting point (L) and a destination point (D) passing through at least one intermediate point ($WP_k$), programmed to implement a method according to any one of Claims 1 to 8.

10. A computer program or set of programs which can be executed by a processing system and which comprise/s one or more code modules for the implementation of a method of calculating a path between a starting point (L) and a destination point (D) passing through at least one intermediate point (WP$_k$), in accordance with any one of Claims 1 to 8.

**Patentansprüche**

1. Computerimplementiertes Verfahren zur Berechnung eines Weges zwischen einen Startpunkt (L) und einem Zielpunkt (D) einer kartografischen Straßenkarte, die auf einem Speichersubstrat gespeichert ist, das von einem Computer gelesen werden kann, wobei der Weg durch mindestens einen vorgegebenen Zwischenwegpunkt (WP$_k$) führt und durch eine Reihe zusammenhängender Elementabschnitte (S$_{ij}$) definiert ist, bei denen jeder Abschnitt einen Transitknoten (n$_{ij}$) mit einem benachbarten Transitknoten (n$_{i\,j+1}$) verbindet, wobei der Start- und der Zielpunkt sowie die Zwischenwegpunkte (L, D, WP$_k$) eine Menge von Punkten darstellen, die den gewünschten Weg definieren, wobei mindestens ein von dem Startpunkt (L) ausgehender Vorwärtsteilweg und ein von dem Zielpunkt (D) ausgehender Rückwärtsteilweg berechnet werden und ein vollständiger Weg (P) zwischen dem Startpunkt (L) und dem Zielpunkt (D) ermittelt wird, indem der Vorwärtsteilweg (P$_{i,f}$) und der Rückwärtsteilweg (P$_{i,b}$), die sich in einem Knotenpunkt treffen, verbunden werden, **dadurch gekennzeichnet, dass** das Verfahren folgende Schritte umfasst:

   - Definieren eines jeweiligen Umgebungsbereichs (A$_k$) für jeden vorgegebenen Zwischenwegpunkt (WP$_k$),
   - Berechnen einer Vielzahl von Vorwärtsteilwegen (P$_{i,f}$) vom Startpunkt (L) aus in Richtung eines provisorischen Zielpunktes, der durch einen vorgegebenen Zwischenwegpunkt (WP$_k$) dargestellt wird,
   - Berechnen einer Vielzahl von Rückwärtsteilwegen (P$_{i,b}$) vom Zielpunkt (D) aus in Richtung eines provisorischen Zielpunktes, der durch einen vorgegebenen Zwischenwegpunkt (WP$_{k'}$) dargestellt wird, und
   - wenn mindestens ein Transitknoten (n$_{ij}$) in dem definierten Umgebungsbereich (A$_k$) eines provisorischen Zielpunktes (WP$_k$; WP$_{k'}$) erreicht worden ist, Ableitung der Teilwege (P$_{i,f}$; P$_{i,b}$), die zu dem provisorischen Zielpunkt (WP$_k$; WP$_{k'}$) hinführen, in Richtung eines nächstfolgenden Wegdefinitionspunktes (WP$_{k+1}$) entsprechend einer vorgegebenen Reiseabfolge, wenn der Teilweg ein Vorwärtsteilweg (P$_{i,f}$) ist, oder in Richtung eines vorhergehenden Wegdefinitionspunktes (WP$_{k'-1}$) entsprechend der vorgegebenen Reiseabfolge, wenn der Teilweg ein Rückwärtsweg (P$_{i,b}$) ist,

   wobei der definierte Umgebungsbereich (A$_k$) als eine Kreisfläche eines Radius (R$_k$) festgelegt wird, der gleich einem vorgegebenen Bruchteil des Minimums zwischen der theoretischen Entfernung des Zwischenwegpunktes (WP$_k$) von einem vorhergehenden Wegdefinitionspunkt (L; WP$_{k-1}$) und von einem nächstfolgenden Wegdefinitionspunkt (D; WP$_{k+1}$) ist;
   wobei das Verfahren die weiteren Schritte umfasst, in denen eine Vielzahl vollständiger Wege (P$_i$) ermittelt wird, indem ein entsprechender Vorwärtsteilweg (P$_{i,f}$) und ein entsprechender Rückwärtsteilweg (P$_{i,b}$), die sich in einem entsprechenden Knotenpunkt treffen, verbunden werden, und ein optimaler vollständiger Weg auf der Basis mindestens eines vorgegebenen Kriteriums ausgewählt wird,
   wobei das vorgegebene Kriterium die Berechnung einer Kostenfunktion umfasst, und
   wobei die Kostenfunktion auf der Basis von Punkten berechnet wird, die gemäß einer vorgegebenen Regel vergeben werden, und von Strafen, die vollständigen Wegen zugeordnet werden, die außerhalb der definierten Umgebungsbereiche (A$_k$) der Zwischenwegpunkte (WP$_k$) liegen.

2. Verfahren nach Anspruch 1, **dadurch gekennzeichnet, dass** das Verfahren einen Schritt umfasst, in dem, wenn mindestens ein Transitknoten (n$_{ij}$) in dem definierten Umgebungsbereich (A$_k$) des provisorischen Zielpunktes (WP$_k$) erreicht worden ist, die Teilwege (P$_{i,f}$, P$_{i,b}$), die zu dem provisorischen Zielpunkt (WP$_k$) hinführen, abgeleitet werden in Richtung:

   i) des Zielpunktes (D), wenn der Teilweg ein Vorwärtsteilweg (P$_{i,f}$) ist und ein einziger erforderlicher Zwischenwegpunkt (WP) vorgegeben ist;
   ii) des Startpunktes (L), wenn der Teilweg ein Rückwärtsteilweg (P$_{i,b}$) ist und ein einziger erforderlicher Zwischenwegpunkt (WP) vorgegeben ist;
   iii) eines weiteren provisorischen Zielpunktes, der durch einen nächstfolgenden vorgegebenen Zwischenwegpunkt (WP$_{k+1}$) in einer vorgegebenen Reiseabfolge dargestellt wird, wenn der Teilweg ein Vorwärtsteilweg (P$_{i,f}$) ist und eine Vielzahl erforderlicher Zwischenwegpunkte (WP$_k$) vorgegeben sind.
   iv) eines weiteren provisorischen Zielpunktes, der durch einen vorhergehenden vorgegebenen Zwischenwegpunkt (WP$_{k-1}$) in einer vorgegebenen Reiseabfolge dargestellt wird, wenn der Teilweg ein Rückwärtsteilweg (P$_{i,b}$) ist und eine Vielzahl erforderlicher Zwischenwegpunkte

(WP$_k$) vorgegeben sind.

3. Verfahren nach Anspruch 1, **dadurch gekennzeichnet, dass** die Kostenfunktion auf der Basis von Punkten berechnet wird, die gemäß einer vorgegebenen Regel vergeben werden, und von Strafen, die vollständigen Wegen zugeordnet werden, bei denen die Knotenpunkte zwischen den Vorwärtsteilwegen (P$_{i,f}$) und den Rückwärtsteilwegen (P$_{i,b}$) außerhalb der definierten Umgebungsbereiche (A$_k$) der Zwischenwegpunkte (WP$_k$) liegen.

4. Verfahren nach Anspruch 1, **dadurch gekennzeichnet, dass** der vorgegebene Bruchteil 0,35 beträgt.

5. Verfahren nach Anspruch 1 oder 4, **dadurch gekennzeichnet, dass** der definierte Umgebungsbereich einen vorgegebenen maximalen Radius von 40 km aufweist.

6. Verfahren nach einem der vorstehenden Ansprüche, **dadurch gekennzeichnet, dass** einen Schritt umfasst, in dem der Benutzer die sequentielle Reihenfolge der erforderlichen Zwischenwegpunkte (WP$_k$) entlang des Weges festlegt.

7. Computerimplementiertes Verfahren zur Berechnung eines Weges zwischen einen Startpunkt (L) und einem Zielpunkt (D) einer kartografischen Straßenkarte, die auf einem Speichersubstrat gespeichert ist, das von einem Computer gelesen werden kann, wobei der Weg durch mindestens einen vorgegebenen Zwischenwegpunkt (WP$_k$) führt und durch eine Reihe zusammenhängender Elementabschnitte (S$_{ij}$) definiert ist, bei denen jeder Abschnitt einen Transitknoten (n$_{ij}$) mit einem benachbarten Transitknoten (n$_{i\,j+1}$) verbindet, wobei der Start- und der Zielpunkt sowie die Zwischenwegpunkte (L, D, WP$_k$) eine Menge von Punkten darstellen, die den gewünschten Weg definieren,
wobei mindestens ein von dem Startpunkt (L) ausgehender Vorwärtsteilweg und ein von dem Zielpunkt (D) ausgehender Rückwärtsteilweg berechnet werden und ein vollständiger Weg (P) zwischen dem Startpunkt (L) und dem Zielpunkt (D) ermittelt wird, indem der Vorwärtsteilweg (P$_{i,f}$) und der Rückwärtsteilweg (P$_{i,b}$), die sich in einem Knotenpunkt treffen, verbunden werden,
**dadurch gekennzeichnet, dass** das Verfahren folgende Schritte umfasst:

  - Definieren eines jeweiligen Umgebungsbereichs (A$_k$) für jeden vorgegebenen Zwischenwegpunkt (WP$_k$),
  - Berechnen einer Vielzahl von Vorwärtsteilwegen (P$_{i,f}$) vom Startpunkt (L) aus in Richtung eines provisorischen Zielpunktes, der durch einen vorgegebenen Zwischenwegpunkt (WP$_k$) dargestellt wird,
  - Berechnen einer Vielzahl von Rückwärtsteilwegen (P$_{i,b}$) vom Zielpunkt (D) aus in Richtung eines provisorischen Zielpunktes, der durch einen vorgegebenen Zwischenwegpunkt (WP$_{k'}$) dargestellt wird,
  - Ableiten eines Teilweges (P$_{i,f}$; P$_{i,b}$) in Richtung eines nächstfolgenden Wegdefinitionspunktes (WP$_{k+1}$) entsprechend der vorgegebenen Reiseabfolge, wenn der Teilweg ein Vorwärtsteilweg (P$_{i,f}$) ist, oder in Richtung eines vorhergehenden Wegdefinitionspunktes (WP$_{k'-1}$) entsprechend der vorgegebenen Reiseabfolge, wenn der Teilweg ein Rückwärtsweg (P$_{i,b}$) ist, wenn von der Vielzahl von Teilwegen (P$_{i,f}$; P$_{i,b}$) eine vorgegebene Anzahl von Zugangsknoten (n$_{ij}$) zu dem definierten Umgebungsbereich (A$_k$) des gegenwärtigen provisorischen Zielpunktes (WP$_k$) erreicht worden ist,

wobei der definierte Umgebungsbereich (A$_k$) als eine Kreisfläche eines Radius (R$_k$) festgelegt wird, der gleich einem vorgegebenen Bruchteil des Minimums zwischen der theoretischen Entfernung des Zwischenwegpunktes (WP$_k$) von einem vorhergehenden Wegdefinitionspunkt (L; WP$_{k-1}$) und von einem nächstfolgenden Wegdefinitionspunkt (D; WP$_{k+1}$) ist;
wobei das Verfahren die weiteren Schritte umfasst, in denen eine Vielzahl vollständiger Wege (P$_i$) ermittelt wird, indem ein entsprechender Vorwärtsteilweg (P$_{i,f}$) und ein entsprechender Rückwärtsteilweg (P$_{i,b}$), die sich in einem entsprechenden Knotenpunkt treffen, verbunden werden, und ein optimaler vollständiger Weg auf der Basis mindestens eines vorgegebenen Kriteriums ausgewählt wird,
wobei das vorgegebene Kriterium die Berechnung einer Kostenfunktion umfasst, und
wobei die Kostenfunktion auf der Basis von Punkten berechnet wird, die gemäß einer vorgegebenen Regel vergeben werden, und von Strafen, die vollständigen Wegen zugeordnet werden, die außerhalb der definierten Umgebungsbereiche (A$_k$) der Zwischenwegpunkte (WP$_k$) liegen.

8. Computerimplementiertes Verfahren zur Berechnung eines Weges zwischen einen Startpunkt (L) und einem Zielpunkt (D) einer kartografischen Straßenkarte, die auf einem Speichersubstrat gespeichert ist, das von einem Computer gelesen werden kann, wobei der Weg durch mindestens einen vorgegebenen Zwischenwegpunkt (WP$_k$) führt und durch eine Reihe zusammenhängender Elementabschnitte (S$_{ij}$) definiert ist, bei denen jeder Abschnitt einen Transitknoten (n$_{ij}$) mit einem benachbarten Transitknoten (n$_{i\,j+1}$) verbindet, wobei der Start- und der Zielpunkt sowie die Zwischenwegpunkte (L, D,

WP$_k$) eine Menge von Punkten darstellen, die den gewünschten Weg definieren,

wobei mindestens ein von dem Startpunkt (L) ausgehender Vorwärtsteilweg und ein von dem Zielpunkt (D) ausgehender Rückwärtsteilweg berechnet werden und ein vollständiger Weg (P) zwischen dem Startpunkt (L) und dem Zielpunkt (D) ermittelt wird, indem der Vorwärtsteilweg (P$_{i,f}$) und der Rückwärtsteilweg (P$_{i,b}$), die sich in einem Knotenpunkt treffen, verbunden werden,

**dadurch gekennzeichnet, dass** das Verfahren folgende Schritte umfasst:

- Definieren eines jeweiligen Umgebungsbereichs (A$_k$) für jeden vorgegebenen Zwischenwegpunkt (WP$_k$),
- Berechnen einer Vielzahl von Vorwärtsteilwegen (P$_{i,f}$) vom Startpunkt (L) aus in Richtung eines provisorischen Zielpunktes, der durch einen vorgegebenen Zwischenwegpunkt (WP$_k$) dargestellt wird,
- Berechnen einer Vielzahl von Rückwärtsteilwegen (P$_{i,b}$) vom Zielpunkt (D) aus in Richtung eines provisorischen Zielpunktes, der durch einen vorgegebenen Zwischenwegpunkt (WP$_{k'}$) dargestellt wird,
- Ableiten eines Teilweges (P$_{i,f}$; P$_{i,b}$) in Richtung eines nächstfolgenden Wegdefinitionspunktes (WP$_{k+1}$) entsprechend der vorgegebenen Reiseabfolge, wenn der Teilweg ein Vorwärtsteilweg (P$_{i,f}$) ist, oder in Richtung eines vorhergehenden Wegdefinitionspunktes (WP$_{k'-1}$) entsprechend der vorgegebenen Reiseabfolge, wenn der Teilweg ein Rückwärtsweg (P$_{i,b}$) ist, wenn von der Vielzahl von Teilwegen (P$_{i,f}$; P$_{i,b}$) eine vorgegebene maximale Anzahl von Transitknoten (n$_{ij}$) erreicht worden ist, beginnend ab dem Zeitpunkt, in dem der erste Zugangsknoten zu dem definierten Umgebungsbereich (A$_k$) des gegenwärtigen provisorischen Zielpunktes (WP$_k$) erreicht worden ist,

wobei der definierte Umgebungsbereich (A$_k$) als eine Kreisfläche eines Radius (R$_k$) festgelegt wird, der gleich einem vorgegebenen Bruchteil des Minimums zwischen der theoretischen Entfernung des Zwischenwegpunktes (WP$_k$) von einem vorhergehenden Wegdefinitionspunkt (L; WP$_{k-1}$) und von einem nächstfolgenden Wegdefinitionspunkt (D; WP$_{k+1}$) ist;

wobei das Verfahren die weiteren Schritte umfasst, in denen eine Vielzahl vollständiger Wege (P$_i$) ermittelt wird, indem ein entsprechender Vorwärtsteilweg (P$_{i,f}$) und ein entsprechender Rückwärtsteilweg (P$_{i,b}$), die sich in einem entsprechenden Knotenpunkt treffen, verbunden werden, und ein optimaler vollständiger Weg auf der Basis mindestens eines vorgegebenen Kriteriums ausgewählt wird,

wobei das vorgegebene Kriterium die Berechnung einer Kostenfunktion umfasst, und wobei die Kostenfunktion auf der Basis von Punkten berechnet wird, die gemäß einer vorgegebenen Regel vergeben werden, und von Strafen, die vollständigen Wegen zugeordnet werden, die außerhalb der definierten Umgebungsbereiche (A$_k$) der Zwischenwegpunkte (WP$_k$) liegen.

**9.** Navigationssystem zur Berechnung eines Weges zwischen einen Startpunkt (L) und einem Zielpunkt (D), wobei der Weg durch mindestens einen Zwischenwegpunkt (WP$_k$) führt und das Navigationssystem so programmiert ist, das es ein Verfahren nach einem der Ansprüche 1 bis 8 ausführt.

**10.** Ein Computerprogramm oder eine Reihe von Programmen, die von einem Verarbeitungssystem ausgeführt werden können und die ein oder mehrere Code-Module zur Ausführung eines Verfahrens zur Berechnung eines Weges zwischen einen Startpunkt (L) und einem Zielpunkt (D) nach einem der Ansprüche 1 bis 8 umfassen, wobei der Weg durch mindestens einen Zwischenwegpunkt (WP$_k$) führt.

**Revendications**

**1.** Procédé implémenté par ordinateur pour calculer un trajet entre un point de départ (L) et un point de destination (D) d'une carte routière cartographique stockée sur un substrat de stockage lisible par un ordinateur, et passant par au moins un point de passage intermédiaire prédéterminé (WP$_k$), le trajet étant défini par une série de sections élémentaires contiguës (s$_{ij}$), chaque section raccordant un noeud de transit (n$_{ij}$) à un noeud de transit adjacent (n$_{i\,j+1}$), les points de départ et de destination et les points de passage intermédiaires (L, D, WP$_k$) constituant un ensemble de points définissant le trajet souhaité,

dans lequel au moins un trajet partiel avant ayant pour origine le point de départ (L) et un trajet partiel arrière ayant pour origine le point de destination (D) sont calculés, et un trajet complet (P) entre le point de départ (L) et le point de destination (D) est obtenu en raccordant le trajet partiel avant (P$_{i,f}$) et le trajet partiel arrière (P$_{i,b}$) qui se rencontrent au niveau d'un noeud d'intersection,

**caractérisé en ce qu'**il comprend les étapes consistant à :

- définir une zone environnante respective (A$_k$) pour chaque point de passage intermédiaire prédéfini (WP$_k$),
- calculer à partir du point de départ (L) une pluralité de trajets partiels avant (P$_{i,f}$) dirigés vers un point cible provisoire représenté par un point de passage intermédiaire prédéfini (WP$_k$),

- calculer à partir du point de destination (D) une pluralité de trajets partiels arrière ($P_{i,b}$) dirigés vers un point cible provisoire représenté par un point de passage intermédiaire prédéfini ($WP_{k'}$), et

- lorsque au moins un noeud de transit ($n_{ij}$) dans la zone environnante définie ($A_k$) d'un point cible provisoire ($WP_k$; $WP_{k'}$) a été atteint, dévier les trajets partiels ($P_{i,f}$, $P_{i,b}$) dirigés vers ledit point cible provisoire ($WP_k$; $WP_{k'}$) en direction d'un point de définition de trajet suivant ($WP_{k+1}$) selon un ordre de déplacement prédéterminé, si le trajet partiel est un trajet avant ($P_{i,f}$), ou en direction d'un point de définition de trajet précédent ($WP_{k'-1}$) selon l'ordre de déplacement prédéterminé, si le trajet partiel est un trajet arrière ($P_{i,b}$),

dans lequel la zone environnante définie ($A_k$) est établie comme une zone circulaire ayant un rayon ($R_k$) qui est égal à une fraction prédéterminée du minimum parmi la distance théorique du point de passage intermédiaire ($WP_k$) depuis un point de définition de trajet précédent (L ; $WP_{k-1}$), et depuis un point de définition de trajet suivant (D ; $WP_{k+1}$) ;
le procédé comprenant en outre l'obtention d'une pluralité de trajets complets ($P_i$) en raccordant un trajet partiel avant respectif ($P_{i,f}$) et un trajet partiel arrière respectif ($P_{i,b}$) qui se rencontrent au niveau d'un noeud d'intersection respectif, et en sélectionnant un trajet complet optimal sur la base d'au moins un critère prédéterminé,
dans lequel ledit critère prédéterminé comprend le calcul d'une fonction de coût, et
dans lequel ladite fonction de coût est calculée sur la base de scores affectés conformément à une règle prédéterminée et de pénalités attribuées aux solutions de trajet complet qui se situent en dehors des zones environnantes définies ($A_k$) des points de passage intermédiaires ($WP_k$).

**2.** Procédé selon la revendication 1, **caractérisé en ce qu'**il comprend, lorsqu'au moins un noeud de transit ($n_{ij}$) dans la zone environnante définie ($A_k$) du point cible provisoire ($WP_k$) a été atteint, de dévier les trajets partiels ($P_{i,f}$, $P_{i,b}$) dirigés vers le point cible provisoire ($WP_k$) en direction :

i) du point de destination (D) si le trajet partiel est un trajet avant ($P_{i,f}$) et un point de passage intermédiaire requis unique (WP) est prédéfini ;
ii) du point de départ (L) si le trajet partiel est un trajet arrière ($P_{i,b}$) et un point de passage intermédiaire requis unique (WP) est prédéfini ;
iii) d'un autre point cible provisoire représenté par un point de passage intermédiaire prédéfini suivant ($WP_{k+1}$) dans un ordre de déplacement prédéterminé, si le trajet partiel est un trajet avant ($P_{i,f}$) et une pluralité de points de passage intermédiaires requis ($WP_k$) sont prédéfinis ;
iv) d'un autre point cible provisoire représenté par un point de passage intermédiaire prédéfini précédent ($WP_{k-1}$) dans un ordre de déplacement prédéterminé, si le trajet partiel est un trajet arrière ($P_{i,b}$) et une pluralité de points de passage intermédiaires requis ($WP_k$) sont prédéfinis.

**3.** Procédé selon la revendication 1, **caractérisé en ce que** la fonction de coût est calculée sur la base des scores affectés conformément à une règle prédéterminée et de pénalités attribuées aux solutions de trajet complet dont les noeuds d'intersection entre les trajets avant partiels ($P_{i,f}$) et les trajets partiels arrière ($P_{i,b}$) sont en dehors des zones environnantes définies ($A_k$) des points de passage intermédiaires ($WP_k$).

**4.** Procédé selon la revendication 1, **caractérisé en ce que** la fraction prédéterminée est égale à 0,35.

**5.** Procédé selon la revendication 1 ou 4, **caractérisé en ce que** la zone environnante définie a un rayon maximum prédéterminé égal à 40 km.

**6.** Procédé selon l'une quelconque des revendications précédentes, **caractérisé en ce qu'**il comprend la définition par l'utilisateur de l'ordre séquentiel des points de passage intermédiaires requis ($WP_k$) le long du trajet.

**7.** Procédé implémenté par ordinateur pour calculer un trajet entre un point de départ (L) et un point de destination (D) d'une carte routière cartographique stockée sur un substrat de stockage lisible par un ordinateur, et passant par au moins un point de passage intermédiaire prédéterminé ($WP_k$), le trajet étant défini par une série de sections élémentaires contiguës ($s_{ij}$), chaque section raccordant un noeud de transit ($n_{ij}$) à un noeud de transit adjacent ($n_{i\,j+1}$), les points de départ et de destination et les points de passage intermédiaires (L, D, WP) constituant un ensemble de points définissant le trajet souhaité,
dans lequel au moins un trajet partiel avant ayant pour origine le point de départ (L) et un trajet partiel arrière ayant pour origine le point de destination (D) sont calculés, et un trajet complet (P) entre le point de départ (L) et le point de destination (D) est obtenu en raccordant le trajet partiel avant ($P_{i,f}$) et le trajet partiel arrière ($P_{i,b}$) qui se rencontrent au niveau d'un noeud d'intersection,
**caractérisé en ce qu'**il comprend les étapes consistant à :

- définir une zone environnante respective ($A_k$) pour chaque point de passage intermédiaire prédéfini ($WP_k$),

- calculer à partir du point de départ (L) une pluralité de trajets partiels avant ($P_{i,f}$) dirigés vers un point cible provisoire représenté par un point de passage intermédiaire prédéfini ($WP_k$),

- calculer à partir du point de destination (D) une pluralité de trajets partiels arrière ($P_{i,b}$) dirigés vers un point cible provisoire représenté par un point de passage intermédiaire prédéfini ($WP_{k'}$),

- dévier un trajet partiel ($P_{i,f}$ ; $P_{i,b}$) en direction d'un point de définition de trajet suivant ($WP_{k+1}$) selon l'ordre de déplacement prédéterminé, si le trajet partiel est un trajet avant ($P_{i,f}$), ou en direction d'un point de définition de trajet précédent ($WP_{k'-1}$) selon l'ordre de déplacement prédéterminé, si le trajet partiel est un trajet arrière ($P_{i,b}$), lorsqu'un nombre prédéterminé de noeuds d'accès ($n_{ij}$) à la zone environnante définie ($A_k$) du point cible provisoire courant ($WP_k$) est atteint par la pluralité de trajets partiels ($P_{i,f}$ ; $P_{i,b}$),

dans lequel la zone environnante définie ($A_k$) est établie comme une zone circulaire ayant un rayon ($R_k$) qui est égal à une fraction prédéterminée du minimum parmi la distance théorique du point de passage intermédiaire ($WP_k$) depuis un point de définition de trajet précédent (L ; $WP_{k-1}$), et depuis un point de définition de trajet suivant (D ; $WP_{k+1}$) ;

le procédé comprenant en outre l'obtention d'une pluralité de trajets complets ($P_i$) en raccordant un trajet partiel avant respectif ($P_{i,f}$) et un trajet partiel arrière respectif ($P_{i,b}$) qui se rencontrent au niveau d'un noeud d'intersection respectif, et en sélectionnant un trajet complet optimal sur la base d'au moins un critère prédéterminé,

dans lequel ledit critère prédéterminé comprend le calcul d'une fonction de coût, et

dans lequel ladite fonction de coût est calculée sur la base de scores affectés conformément à une règle prédéterminée et de pénalités attribuées aux solutions de trajet complet qui se situent en dehors des zones environnantes définies ($A_k$) des points de passage intermédiaires ($WP_k$).

**8.** Procédé implémenté par ordinateur pour calculer un trajet entre un point de départ (L) et un point de destination (D) d'une carte routière cartographique stockée sur un substrat de stockage lisible par un ordinateur, et passant par au moins un point de passage intermédiaire prédéterminé ($WP_k$), le trajet étant défini par une série de sections élémentaires contiguës ($s_{ij}$), chaque section raccordant un noeud de transit ($n_{ij}$) à un noeud de transit adjacent ($n_{i\,j+1}$), les points de départ et de destination et les points de passage intermédiaires (L, D, $WP_k$) constituant un ensemble de points définissant le trajet souhaité,

dans lequel au moins un trajet partiel avant ayant pour origine le point de départ (L) et un trajet partiel arrière ayant pour origine le point de destination (D) sont calculés, et un trajet complet (P) entre le point de départ (L) et le point de destination (D) est obtenu en raccordant le trajet partiel avant ($P_{i,f}$) et le trajet partiel arrière ($P_{i,b}$) qui se rencontrent au niveau d'un noeud d'intersection,

**caractérisé en ce qu'**il comprend les étapes consistant à :

- définir une zone environnante respective ($A_k$) pour chaque point de passage intermédiaire prédéfini ($WP_k$),

- calculer à partir du point de départ (L) une pluralité de trajets partiels avant ($P_{i,f}$) dirigés vers un point cible provisoire représenté par un point de passage intermédiaire prédéfini ($WP_k$),

- calculer à partir du point de destination (D) une pluralité de trajets partiels arrière ($P_{i,b}$) dirigés vers un point cible provisoire représenté par un point de passage intermédiaire prédéfini ($WP_{k'}$),

- dévier un trajet partiel ($P_{i,f}$ ; $P_{i,b}$) en direction d'un point de définition de trajet suivant ($WP_{k+1}$) selon l'ordre de déplacement prédéterminé, si le trajet partiel est un trajet avant ($P_{i,f}$), ou en direction d'un point de définition de trajet précédent ($WP_{k'-1}$) selon l'ordre de déplacement prédéterminé, si le trajet partiel est un trajet arrière ($P_{i,b}$), lorsqu'un nombre maximum prédéterminé de noeuds de transit ($n_{ij}$) est atteint par la pluralité de trajets partiels ($P_{i,f}$ ; $P_{i,b}$), en commençant par le moment où le premier noeud d'accès à la zone environnante définie ($A_k$) du point cible provisoire courant ($WP_k$) est atteint,

dans lequel la zone environnante définie ($A_k$) est établie comme une zone circulaire ayant un rayon ($R_k$) qui est égal à une fraction prédéterminée du minimum parmi la distance théorique du point de passage intermédiaire ($WP_k$) depuis un point de définition de trajet précédent (L ; $WP_{k-1}$), et depuis un point de définition de trajet suivant (D ; $WP_{k+1}$) ;

le procédé comprenant en outre l'obtention d'une pluralité de trajets complets ($P_i$) en raccordant un trajet partiel avant respectif ($P_{i,f}$) et un trajet partiel arrière respectif ($P_{i,b}$) qui se rencontrent au niveau d'un noeud d'intersection respectif, et en sélectionnant un trajet complet optimal sur la base d'au moins un critère prédéterminé,

dans lequel ledit critère prédéterminé comprend le calcul d'une fonction de coût, et

dans lequel ladite fonction de coût est calculée sur la base de scores affectés conformément à une règle prédéterminée et de pénalités attribuées aux solutions de trajet complet qui se situent en dehors des zones environnantes définies ($A_k$) des points de passage intermédiaires ($WP_k$).

**9.** Système de navigation pour le calcul d'un trajet entre un point de départ (L) et un point de destination (D) passant par au moins un point intermédiaire (WP$_k$), programmé pour implémenter un procédé selon l'une quelconque des revendications 1 à 8.

10. Programme informatique ou ensemble de programmes qui peut être exécuté par un système de traitement et qui comprend un ou plusieurs modules de code pour implémenter un procédé de calcul d'un trajet entre un point de départ (L) et un point de destination (D) passant par au moins un point intermédiaire (WP$_k$), selon l'une quelconque des revendications 1 à 8.

FIG.1

EP 1 939 590 B1

# FIG.2

EP 1 939 590 B1

FIG.3

FIG.4

EP 1 939 590 B1

# FIG.5

10

18

20

12

14

16

EP 1 939 590 B1

**EP 1 939 590 B1**

## REFERENCES CITED IN THE DESCRIPTION

### Patent documents cited in the description

- US 20040039520 A